# EUROPEAN PATENT SPECIFICATION

(11) **EP 0 733 898 B1**
(45) Date of publication and mention of the grant of the patent: **12.09.2001**
(21) Application number: 96400627.4
(22) Date of filing: 25.03.1996
(51) Int. Cl.: G01N 25/68

(54) **Early detection of a risk of water condensation**
Frühzeitige Erkennung des Kondensationsrisikos von Wasser
Détection précoce d'un risque de condensation d'eau

(30) Priority: 23.03.1995 FR 9503413
(43) Date of publication of application: 25.09.1996
(73) Proprietor: IMRA EUROPE S.A., 06560 Valbonne (FR)
(72) Inventor: Gschwind, Michel, 06130 Plascassier (FR); Ancey, Pascal, Mas des Chênes - Villa No. 6, 06130 Grasse (FR)
(74) Representative: Leszczynski, André

(56) References cited:
- EP-A- 0 613 000
- FR-A- 2 623 909
- US-A- 4 240 284

## Description

The present invention relates to a process for early detection of a risk of water condensation on a surface area that is in contact with a volume of humid air.

The claimant company has already described such a process in FR-A-2 702 049. This process consists in placing on a surface a sensitive element which initially has roughly the same temperature as that of the surface. A preliminary heating phase using a heating means then causes the temperature of this sensitive element to increase to a temperature greater than that of the surface. A cooling phase using a cooling means with the same thermal capacity as the heating means then causes the temperature of the sensitive element to decrease below the temperature of the surface. A comparison is then made between the ratio of the duration of the first heating phase to the temperature increase during heating and the ratio of the duration of the cooling phase to the temperature decrease during cooling. A significant difference between these two ratios indicates there is a risk of condensation on the surface.

Thanks to such a process, it is possible to detect a risk of condensation on the surface in an effective manner.

According to this known process, the thermal amplitude of the oscillations is determined in order to be able to detect a risk of condensation sufficiently in advance in relation to the moment when water condensation may effectively occur.

However. this process is subject to a restriction due to the low frequency of thermal oscillations of the sensitive element.

To carry out the thermal oscillations, it is necessary to provide the sensitive element with a heating and cooling energy that increases as the thermal amplitude of the oscillations increases.

This energy can be provided over a very short period, by means of high capacity heating and cooling means, or over a relatively long period, which makes it possible to use low capacity heating and cooling means.

Each of these alternatives has disadvantages.

If high capacity heating and cooling means are used, the problem of the consumption of these heating and cooling means arises, as well as the problem of detection reliability.

If the water condensation energy is too low compared to the energy supplied to the sensitive element during the cooling phase, there is a risk that the disruption generated by condensation of the first droplets may be negligible, resulting in a delay in the total cooling phase that is too small to be detected.

On the other hand, if the capacity of the heating and cooling means used is too low, the duration of the thermal cycles is lengthened, and the moment when a risk of condensation is detected is delayed.

The purpose of the present invention is to provide a process of the type described above, which enables early and reliable detection of a risk of water condensation on the surface.

The object of the present invention is a process to detect a risk of water condensation on a surface that is in contact with a volume of humid air. In this process, a sensitive element is placed on the surface and initially has roughly the same temperature as the surface. Then, using heating and cooling means, a succession of thermal cycles are caused on this clement, each constituted by a cooling phase and a heating phase. The process is characterised by the fact that the cooling phase of each cycle is performed in two consecutive steps; a first step during which high power is supplied to the cooling means to rapidly make the temperature of the sensitive element drop below the temperature of the surface, and a second step during which low power is supplied to the cooling means to slowly reduce the temperature of the sensitive element until the cooling phase ends.

It will be appreciated that the process according to the invention makes it possible to obtain not only relatively short thermal cycles and hence early detection of the risk of condensation, but also high sensitivity to condensation, due to the fact that the quantity of energy of a possible water condensation on the surface of the sensitive element is a significant quantity compared to the cooling energy that is supplied to the sensitive element during the second cooling step, when water condensation is likely to occur.

In a first embodiment of the invention, for each cycle, the temperature of the sensitive element is measured during the cooling phase and this cooling phase is interrupted when the sensitive element reaches a predetermined lower temperature.

In this embodiment, the duration of the heating phase can be determined in different ways.

In a first variant, the temperature of the sensitive clement is also measured during heating and the heating phase is interrupted when the sensitive clement reaches a predetermined high temperature.

The advantage of this variant is that it is particularly simple to implement.

However it requires sufficiently precise measurement means.

In a second variant, the duration of the heating phase is limited to a fixed duration which for example can be equal to the duration of the cooling phase in the same cycle, or to the mean the cooling phases in a determined number of first cycles in the succession of cycles.

In this first embodiment of the invention, the risk of condensation can be detected in a number of different ways.

In a first variant, the evolution of the period of the thermal cycles is monitored. Any lengthening of this period is taken to indicate the appearance of condensation on the sensitive element, that is a risk of condensation on the surface.

In a second variant, the heating phase is performed in two consecutive steps; a first step whose duration is equal to that of the first step in the cooling phase and during which the power supplied to the heating means is roughly equal to that supplied to the cooling means during the first step of the cooling phase, and a second step whose duration is determined as described above and during which the power supplied to the heating means is roughly equal to that supplied to the cooling means during the second step in the cooling phase.

In this second variant, the risk of condensation can be detected by comparing the ratio of the duration of the heating phase to the temperature increase during heating and the ratio of the duration of the cooling phase to the temperature decrease during cooling. A significant different between these two ratios indicates that water condensation has appeared on the sensitive element, and so there is a risk of condensation on the surface.

In a second embodiment of the invention, the energy supplied to cool the sensitive element during the cooling phase of the first cycle is measured and this energy is recorded.

During the heating and cooling phases of the subsequent cycles, the energy supplied to heat or cool the sensitive clement is measured in real time and the heating or cooling phase is interrupted during execution as soon as the energy supplied to the sensitive element during this phase is equal to the previously recorded energy.

In a variant, the energy in the cooling phase of the first cycle is compared to a previously known value, and during the first cycle it is checked that the difference between the energy of the first cooling phase and the previously known value is minimal.

In such a case, the new measured value is recorded to serve as a previously known value for subsequent implementation of the process.

On the other hand, if the difference between the measured value and the previously known value is considerable, it is possible to deduce from this an anomaly which indicates either malfunctioning of the device, or the appearance of water condensation on the sensitive element in the first thermal cycle.

It will be appreciated that the second embodiment of the invention can be combined with the first. In this case the energy is only measured in real time during the heating phases. The duration of the cooling phases is determined by measuring the temperature of the sensitive element during cooling, and comparing it with a predetermined lower temperature.

In order to explain the invention more clearly, we arc now going to give a non-exhaustive description of different examples of implementation, with reference to the attached drawing in which:
- figure 1 is a diagram representing a device enabling the invention to be implemented,
- figure 2 is a graphic representation of the current supplied to the device in figure 1 for a first embodiment of the invention, and of the evolution of the temperature of the sensitive element as a function of this current,
- figure 3 is a view similar to figure 2, corresponding to a second embodiment of the invention,
- figure 4 is a view similar to figure 2, corresponding to a third embodiment of the invention, and
- figure 5 is a view similar to figure 2, representing a fourth embodiment of the invention.

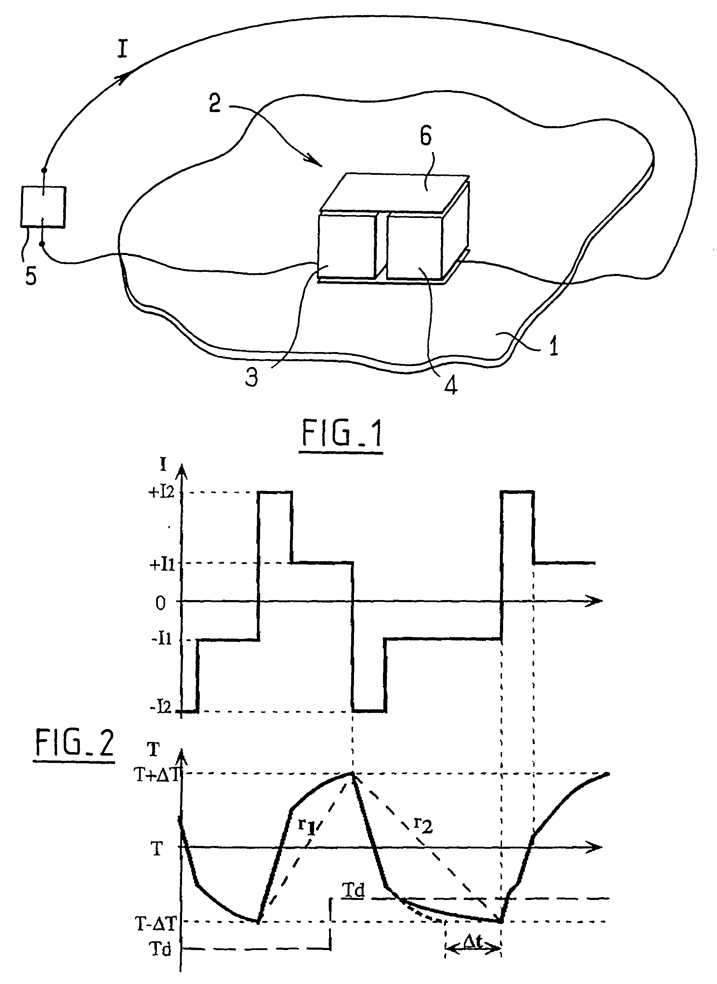

Figure 1 represents a portion of a surface on which we want to detect a risk of condensation.

A detection device consisting of a Peltier effect module 2 comprises two semi-conductor elements 3 and 4, doped N and P respectively, which arc electrically connected in series and powered by a current generator 5.

A plate 6 made from high thermal conductivity material links the upper ends of the two semi-conductor elements 3 and 4. This plate 6 serves as a sensitive element in the sense of the invention. It undergoes thermal oscillations as a result of a modification in the power supply current I of the Peltier effect module 2.

When the Peltier effect module 2 is not powered by any current, plate 6 adopts the temperature of the surface 1, and both ends of each semi-conductor element 3 and 4 have the same temperature.

In these conditions, the Seebeck voltage at the Peltier effect module is zero.

In a first embodiment of the invention, the thermal amplitude of the cycles is determined by measuring this Scebeck voltage Up which indicates there is a difference in temperature ± ΔT between the upper plate and the surface 2.

Therefore, in order to increase the temperature of the plate 6 to a temperature T + ΔT, where T is the temperature of the surface 1, a current + I is sent to the Peltier effect module 2 and the voltage U at this module's terminals is simultaneously measured.

By deducting its resistance component Uᵣ from this voltage we obtain the Seebeck voltage Uₚ = U - Uᵣ.

When the Seebeck voltage has reached a value corresponding to a temperature difference ΔT between the two ends of the semi-conductor elements 3 and 4, the temperature of plate 6 is considered equal to T + ΔT, assuming that the change in temperature of the surface 2 due to thermal disturbance created by the Peltier effect is negligible.

We proceed in the same way to cool plate 6 to a temperature T - ΔT.

Figure 2 represents the evolution of the power supply current to the Peltier effect module as a function of time, as well as the evolution of the Seebeck voltage Uₚ, which indicates the variations in temperature of the sensitive element 6.

It is apparent that the heating and cooling phases are each divided into two steps, that is a first step during which the current I = I₂ is strong, and a second step during which the current I = I₁ is weak.

The evolution of temperature corresponding to these two steps clearly shows that the temperature increases and decreases rapidly when the current I is strong, and changes more slowly when the current I is weak.

Water condensation occurs when T-ΔT is smaller than the dew point temperature T_{d}, during the cooling phase of the second step.

It is clearly visible that due to the slow evolution in the temperature of the plate 6, the water condensation causes a non-negligible delay Δt in the cooling phase.

Measurement of this delay Δt makes it possible to detect a risk of water condensation on the surface.

In the example in figure 2, where the heating phases arc also divided into two steps, it is also possible to detect the appearance of condensation on the upper plate by comparing the absolute values of the slopes r₁ and r₂ of the heating and cooling phases.

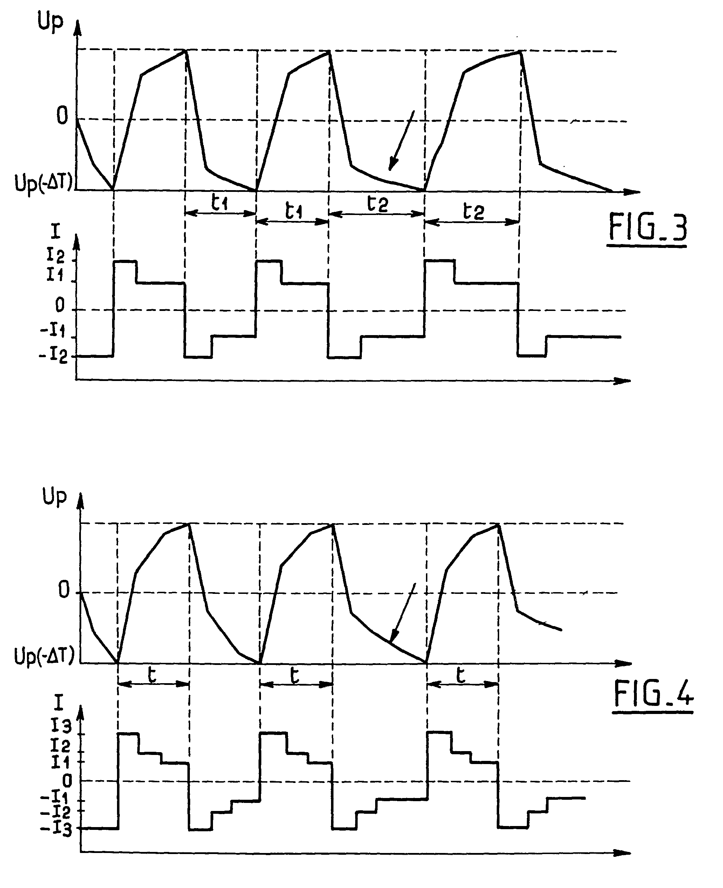

In the embodiment illustrated in figure 3, the temperature of the plate 6 is only measured during the cooling phases.

To this end, as described in reference to figure 2, the Seebeck voltage at the terminals of the Peltier effect module is measured, and the cooling phase is interrupted when there is a difference ΔT between the temperature T of the surface 2 and temperature T - ΔT of the plate 6.

During each thermal cycle, the duration tᵢ of each cooling phase is measured, and the duration of the heating phase in the same cycle is fixed at the same duration tᵢ.

When condensation appears on the upper plate, as indicated by a dip during the second cycle, the duration t₂ of the cooling phase lengthens and consequently the duration t₂ of the next heating phase is prolonged by an equal proportion.

This results in a lengthening of the total period 2t₂ of the thermal cycle, making it possible to detect a risk of condensation.

In the example represented in figure 4, the duration t of the heating phases is defined as equal to the mean of the durations of the cooling phases in the first N cycles in the succession of cycles. N is preferably between 1 and 10.

Since this duration t is fixed, in the event of water condensation on plate 6 indicated by a dip during the second cycle, this plate 6 does not reach its maximum temperature T + ΔT. Instead it reaches a lower temperature, due to the energy consumed by the water to evaporate during heating.

It follows that in the next cycle, the water condensation appears earlier during the cooling.

This phenomenon causes the total period of each cycle to lengthen, which also makes it possible to detect a risk of condensation on the surface.

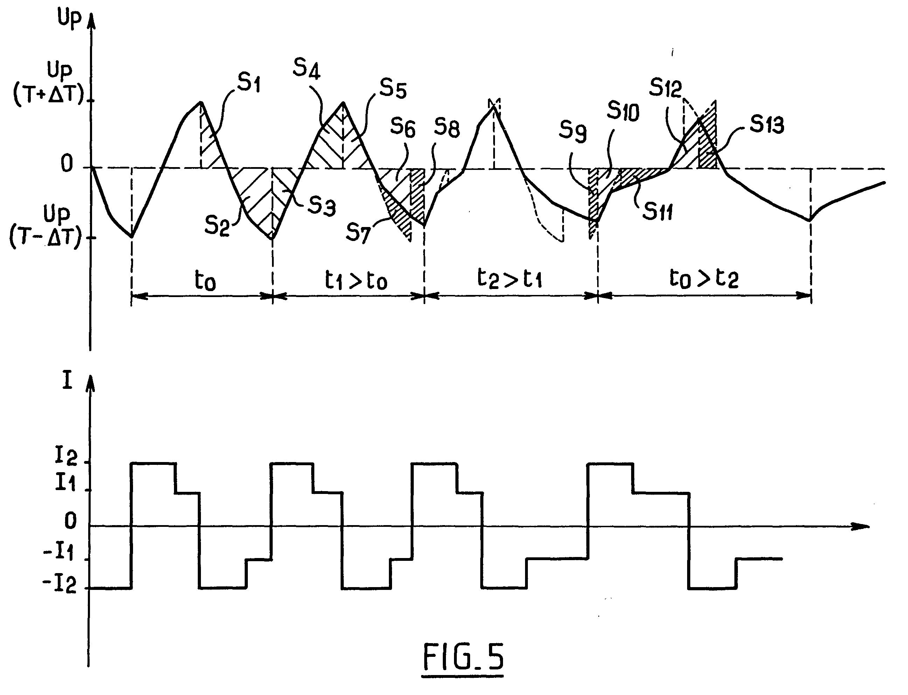

It should be noted that in this embodiment of the invention illustrated in figure 5, the heating and cooling phases are divided into three steps, instead of just two as in the previously described embodiment.

These three steps make it possible to obtain more gradual adaptation of the energy supplied, especially during cooling, to achieve greater sensitivity to detection of condensation on the sensitive element.

In a non-illustrated variant, the energy supplied to the sensitive unit to cool it could be reduced continuously and gradually, which would be equivalent to dividing the cooling phase into an infinity of steps.

In the example illustrated in figure 5, the energy supplied to plate 6 was measured in real time during the first cooling phase.

This energy is represented on the drawings by the two surfaces S₁ and S₂.

This energy is recorded at the start of the succession of cycles.

The subsequent heating and cooling phases are fixed so that the energy supplied to the upper plate is equal to the energy recorded.

Therefore, during the first heating phase that follows, the energy supplied to the plate is identical to the recorded energy which was supplied to the plate during cooling, as shown by surfaces S₃ and S₄ which are equal to S₁ and S₂ respectively.

In the absence of any condensation, the plate therefore reaches its high temperature T + ΔT.

When condensation appears on plate 6, the cooling phase is prolonged until the energy supplied during cooling is the same as the recorded energy, and the plate does not reach its low temperature T - ΔT.

The equality of the energies is visible on the graph where :${\text{S}}_{\text{5}} {\text{= S}}_{\text{1}} {\text{and S}}_{\text{6}} {\text{+ S}}_{\text{8}} {\text{= S}}_{\text{2}} {\text{, given that S}}_{\text{8}} {\text{= S}}_{\text{7}} \text{.}$

The next heating phase is also prolonged, as is the subsequent cooling phase.

The equality between the energy supplied during heating and the recorded energy is represented on the graph for the fourth cycle where:${\text{S}}_{\text{10}} {\text{+ S}}_{\text{11}} {\text{+ S}}_{\text{12}} {\text{= S}}_{\text{1}} {\text{+ S}}_{\text{2}} {\text{, given that S}}_{\text{11}} {\text{= S}}_{\text{9}} {\text{+S}}_{\text{13}} \text{.}$

It follows that the thermal amplitude of the cycles reduces, whereas their period lengthens.

It is then possible to detect a risk of condensation by monitoring the evolution in the period of the cycles.

In a variant, it is also possible to monitor the evolution of the Seebeck voltage at the terminals of the Peltier effect module, and observe in this way that the thermal amplitude of the cycles decreases, which is also characteristic of a risk of condensation on surface 1.

It will be appreciated that the embodiments which have been described above are not exhaustive in nature and that any desirable modifications can be made to them without departing from the invention as defined by the claims.

## Claims

1. A process to detect a risk of water condensation on a surface in contact with a volume of humid air comprising the steps of placing on the surface a sensitive element which initially adopts a temperature corresponding roughly to that of the surface, and then causing by using heating and cooling means a succession of thermal cycles on this sensitive element, each consisting of a cooling phase and a heating phase, said process being **characterised by** the fact that the cooling phase of each cycle is performed in at least two consecutive steps, namely a first step during which a strong current (-I₂; -I₃) is supplied to the cooling means (3, 4) to rapidly decrease the temperature of the sensitive element (6) below the temperature (T) of the surface (1), and a second step during which a low current (-I₁) is supplied to the cooling means (3, 4) to slowly lower the temperature (T) of the sensitive clement (6) until the cooling phase ends.

2. A process as claimed in claim 1, wherein during each cycle the temperature of the sensitive element (6) is measured during the cooling phase and this cooling phase is interrupted when the sensitive element (6) reaches a pre-determined lower temperature (T-ΔT).

3. A process as claimed in claim 2, wherein the temperature of the sensitive element (6) is also measured during heating and the heating phase is interrupted when the sensitive element (6) reaches a pre-determined higher temperature (T+ΔT).

4. A process as claimed in claim 2, wherein the duration (ti) of the heating phase of a cycle is equal to the duration (tᵢ) of the cooling phase of the same cycle.

5. A process as claimed in claim 2, wherein the duration (t) of the heating phase is equal to the mean duration of the cooling phases in a predetermined number of first cycles in the succession of cycles.

6. A process as claimed in any of the claims 2 to 5, wherein the evolution of the period of the thermal cycles is monitored, and any lengthening of this period indicates the appearance of condensation on the sensitive element (6), that is a risk of condensation on the surface (2).

7. A process as claimed in any of the claims 2 to 5, wherein the heating phase is performed in two consecutive steps, namely, a first step whose duration is equal to that of the first step in the cooling phase and during which the current (I₂; I₃) supplied to the heating means (3,4) is roughly equal to that (-I₂; -I₃) supplied to the cooling means (3, 4) during the first step of the cooling phase, and a second step during which the current (I₁) supplied to the heating means (3, 4) is roughly equal to the current (-I₁) supplied to the cooling means (3, 4) during the second step of the cooling phase, wherein the duration of this second step is determined in compliance with any one of the claims 3 to 5, wherein detection of a risk of condensation is performed by comparing the ratio of the duration of the heating phase to the temperature increase during beating and the ratio of the duration of the cooling phase to the temperature decrease during cooling, and wherein a significant difference between these two ratios indicates the appearance of water condensation on the sensitive element (6), i.e. a risk of condensation on the surface (1).

8. A process as claimed in claim 1, wherein the energy (S₁+S₂) supplied to cool the sensitive element (6) during the first cycle's cooling phase is measured and recorded, and during the healing and cooling phases of subsequent cycles the energy supplied to heat or cool the sensitive element (6) is measured in real time, the heating or cooling phase in progress being interrupted as soon as the energy supplied to the sensitive element (6) during this phase is equal to the previously recorded energy.

9. A process as claimed in claim 8, modified in that the energy is only measured in real time during the heating phases, wherein the duration of the cooling phases is determined by measuring the temperature of the sensitive element (6) during cooling and comparing this measurement with a pre-determined low temperature (T-ΔT).

## Patentansprüche

1. Verfahren zur Erfassung eines Wasserkondensationsrisikos auf einer Oberfläche, die in Kontakt zu einem Volumen mit feuchter Luft ist, das die Schritt aufweist, dass auf der Oberfläche ein empfindliches Element angeordnet wird, das anfangs eine Temperatur annimmt, die grob der der Oberfläche entspricht, wobei dann durch Verwendung von Heiz- und Kühlmitteln eine Aufeinanderfolge von thermischen Zyklen auf das empfindliche Element angewandt wird, wobei jeder aus einer Kühlphase und einer Heizphase besteht, wobei das Verfahren **dadurch gekennzeichnet** ist, dass die Kühlphase jedes Zyklusses in zumindest zwei aufeinanderfolgenden Schritten durchgeführt wird, nämlich einem ersten Schritt während dessen ein starker Strom (-I₂; -I₃) an die Kühleinrichtung (3, 4) angelegt wird, um die Temperatur des empfindlichen Elementes (6) schnell unter die Temperatur (T) der Oberfläche (1) zu senken, und einem zweiten Schritt, während dessen ein niedriger Strom (-I₁) an die Kühleinrichtung (3, 4) angelegt wird, um die Temperatur (T) des empfindlichen Elementes (6) langsam zu verringern, bis die Kühlphase beendet ist.

2. Verfahren nach Anspruch 1, wobei während jedes Zyklusses die Temperatur des empfindlichen Elementes (6) während der Kühlphase gemessen wird und diese Kühlphase unterbrochen wird, wenn das empfindliche Element (6) eine vorbestimmte untere Temperatur (T-ΔT) erreicht.

3. Verfahren nach Anspruch 2, wobei die Temperatur des empfindlichen Elements (6) auch während des Heizens gemessen wird und die Heizphase unterbrochen wird, wenn das empfindliche Element (6) eine vorbestimmte höhere Temperatur (T+ΔT) erreicht.

4. Verfahren nach Anspruch 2, wobei die Dauer (ti) der Heizphase eines Zyklus gleich der Dauer (ti) der Kühlphase des gleichen Zyklusses ist.

5. Verfahren nach Anspruch 2, wobei die Dauer (t) der Heizphase gleich der mittleren Dauer der Kühlphasen in einer vorbestimmten Anzahl von ersten Zyklen in den aufeinanderfolgenden Zyklen ist.

6. Verfahren nach irgendeinem der Ansprüche 2 bis 5, wobei die Entwicklung der Periode der thermischen Zyklen überwacht wird, und irgendeine Verlängerung dieser Periode das Auftreten der Kondensation auf dem empfindlichen Element (6), d.h. ein Risiko der Kondensation auf der Oberfläche (2), anzeigt.

7. Verfahren nach einem der Ansprüche 2 bis 5, wobei die Heizphase in *zwei* aufeinanderfolgenden Schritten durchgeführt wird, nämlich einem ersten Schritt, dessen Dauer der des ersten Schrittes der Kühlphase gleicht und während der der Strom (I₂; I₃), der der Heizeinrichtung (3, 4) zugeführt wird, grob gleich dem (-I₂; -I₃) ist, der der Kühleinrichtung (3, 4) während des ersten Schrittes der Kühlphase zugeführt wird, und einen zweiten Schritt, während dem der Strom (I₁), der der Heizeinrichtung (3, 4) zugeführt wird, grob gleich dem Strom (-I₁) ist, der der Kühleinrichtung (3, 4) während des zweiten Schrittes der Kühlphase zugeführt wird, wobei die Dauer des zweiten Schrittes in Übereinstimmung mit irgendeinem der Ansprüche 3 bis 5 bestimmt wird, wobei die Erfassung eines Kondensationsrisikos durchgeführt wird, indem das Verhältnis der Dauer der Heizphase zu der Temperatursteigerung während des Heizens und das Verhältnis der Dauer der Kühlphase zu der Temperaturverringerung während der Kühlung verglichen wird, und wobei eine merkliche Differenz zwischen diesen zwei Verhältnissen das Auftreten einer Wasserkondensation auf dem empfindlichen Element (6), d.h. eine Kondensationsgefahr auf der Oberfläche (1), anzeigt.

8. Verfahren nach Anspruch 1, wobei die Energie (S₁+S₂), die dem empfindlichen Element (6) während der Kühlphase des ersten Zyklusses zum Kühlen zugeführt worden ist, gemessen und aufgezeichnet wird, und während der Heiz- und Kühlphasen von nachfolgenden Zyklen die Energie, die zum Heizen oder Kühlen des empfindlichen Elementes (6) zugeführt wird, in der Realzeit bzw. der tatsächlichen Zeit gemessen wird, wobei die Heiz- oder Kühlphase, die im Fortschritt ist, unterbrochen wird, sobald die Energie, die dem empfindlichen Element (6) während dieser Phase zugeführt wird, gleich der zuvor aufgezeichneten Energie ist.

9. Verfahren nach Anspruch 8, das abgewandelt ist, indem die Energie lediglich in Realzeit bzw, in der tatsächlichen Zeit während der Heizphasen gemessen wird, wobei die Dauer der Kühlphasen durch Messen der Temperatur des empfindlichen Elementes (6) während des Kühlens bestimmt wird und diese Messung mit einer vorbestimmten niedrigen Temperatur (T-ΔT) verglichen wird.

## Revendications

1. Procédé pour détecter un risque de condensation d'eau sur une surface se trouvant au contact d'un volume d'air humide, comprenant les étapes consistant à disposer sur la surface un élément sensible qui prend initialement une température correspondant sensiblement à celle de la surface, et ensuite provoquer sur cet élément sensible, à l'aide de moyens de refroidissement et de chauffage, une succession de cycles thermiques constitués chacun par une phase de refroidissement et une phase de chauffage, ledit procédé étant **caractérisé par** le fait que l'on réalise la phase de refroidissement de chaque cycle en au moins deux étapes consécutives, à savoir, une première étape au cours de laquelle on fournit une forte puissance (-I₂ ; -I₃) aux moyens de refroidissement (3,4) pour abaisser rapidement la température de l'élément sensible (6) en dessous de la température (T) de la surface (1), et une seconde étape au cours de laquelle on fournit une faible puissance (-I₁) aux moyens de refroidissement (3,4) pour abaisser lentement la température (T) de l'élément sensible (6) jusqu'à la fin de la phase de refroidissement.

2. Procédé selon la revendication 1, dans lequel l'on mesure, au cours de chaque cycle, la température de l'élément sensible (6) lors de la phase de refroidissement et que l'on interrompt cette phase de refroidissement lorsque l'élément sensible (6) atteint une température inférieure prédéterminée (T-ΔT).

3. Procédé selon la revendication 2, dans lequel l'on mesure également la température de l'élément sensible (6) lors du chauffage et que l'on interrompt la phase de chauffage lorsque l'élément sensible (6) atteint une température supérieure prédéterminée (T+ΔT).

4. Procédé selon la revendication 2, dans lequel la durée (tᵢ) de la phase de chauffage d'un cycle est égale à la durée (tᵢ) de la phase de refroidissement du même cycle.

5. Procédé selon la revendication 2, dans lequel la durée (t) de la phase de chauffage est égale à la durée moyenne des phases de refroidissement d'un nombre prédéterminé de premiers cycles de la succession de cycles.

6. Procédé selon l'une quelconque des revendications 2 à 5, dans lequel l'on surveille l'évolution de la période des cycles thermiques, tout allongement de cette période étant significative de l'apparition d'une condensation sur l'élément sensible (6), c'est-à-dire d'un risque de condensation sur la surface (2).

7. Procédé selon l'une quelconque des revendications 2 à 5, dans lequel l'on réalise la phase de chauffage en deux étapes consécutives, à savoir, une première étape ayant une durée égale à celle de la première étape de la phase de refroidissement et au cours de laquelle le courant (I₂ ; I₃) fourni aux moyens de chauffage (3,4) est sensiblement égal à celui (-I₂ ; -I₃) fourni aux moyens de refroidissement (3,4) lors de la première étape de la phase de refroidissement, et une seconde étape au cours de laquelle le courant (I₁) fourni aux moyens de chauffage (3,4) est sensiblement égale à celui (-I₁) fourni aux moyens de refroidissement (3,4) lors de la seconde étape de la phase de refroidissement, la durée de cette seconde étape étant déterminée conformément à l'une quelconque des revendications 3 à 5, la détection d'un risque de condensation étant effectuée en comparant le rapport de la durée de la phase de chauffage à l'élévation de température au cours du chauffage, et le rapport de la durée de la phase de refroidissement à la diminution de température au cours du refroidissement, une différence notable entre ces deux rapports mettant en évidence l'apparition d'une condensation d'eau sur l'élément sensible (6), c'est-à-dire un risque de condensation sur la surface (1).

8. Procédé selon la revendication 1, dans lequel l'on mesure l'énergie (S₁+S₂) fournie pour refroidir l'élément sensible (6) lors de la phase de refroidissement du premier cycle, que l'on enregistre cette énergie, et que, lors des phases de chauffage et de refroidissement des cycles ultérieurs, on mesure en temps réel l'énergie fournie pour chauffer ou refroidir l'élément sensible (6), la phase de chauffage ou de refroidissement étant interrompue en cours d'exécution, dès que l'énergie fournie à l'élément sensible (6) au cours de cette phase, est égale à l'énergie préalablement enregistrée.

9. Procédé selon la revendication 8 modifiée en ce que l'on ne mesure l'énergie en temps réel que pour les phases de chauffage, la durée des phases de refroidissement étant déterminée par mesure de la température de l'élément sensible (6) lors du refroidissement et comparaison de cette mesure avec une température inférieure prédéterminée (T-ΔT).
